(19) Europäisches Patentamt / European Patent Office / Office européen des brevets

(11) **EP 4 407 296 A1**

(12) **EUROPEAN PATENT APPLICATION**

(43) Date of publication:
**31.07.2024   Bulletin 2024/31**

(21) Application number: **23305089.7**

(22) Date of filing: **24.01.2023**

(51) International Patent Classification (IPC):
***G01N 21/00*** (2006.01)

(52) Cooperative Patent Classification (CPC):
**G01N 21/4788; G01N 21/4785;** G01N 2021/479

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Centre national de la recherche scientifique
75016 Paris (FR)**

• **Université de Strasbourg
67000 Strasbourg (FR)**

(72) Inventors:
• **HEBRAUD, Pascal
67280 OBERHASLACH (FR)**
• **MOMIN, Saeel Ismail
411038 PUNE (IN)**

(74) Representative: **IPAZ
Bâtiment Platon
Parc Les Algorithmes
91190 Saint-Aubin (FR)**

(54) **OPTICAL DEVICE FOR LASER SPECKLE IMAGING**

(57)     The invention relates to an optical device for Laser Speckle Imaging (LSI) comprising a laser and a photodetector, the laser being arranged to emit an incident impinging a working area and the photodetector being arranged for obtaining at least one speckle image of the working area, the optical device further comprising a processing unit arranged and/or programmed for determining humidity data of the working area from the at least one speckle image, the humidity data comprising a humidity level and/or a variation of the humidity level in the working area.

FIGURE 1

**Description**

**Field of the invention**

The present invention relates to humidity sensors or hygrometers.

In particular, the present invention deals with humidity sensors based on hygroscopic materials. In this type of humidity sensors, the humidity or hygroscopic level is determined using a measurable change of a property of a hygroscopic material.

**Background to the invention**

It is known in the art thermal, optical and gravimetric humidity sensors in which the detection consists in measuring a change of a property directly in the air or a sample of air. Thermal humidity sensors use data collected by two thermal sensors. One thermal sensor is placed in dry nitrogen while the other measures the temperature of ambient air. The difference between these data enables humidity level calculation.

Another type of humidity sensors is based on a change of a property of a hygroscopic material. This change of property can be assessed by capacitive, resistive, or optical measurements.

In this kind of humidity sensors, the operating principle relies on the adsorption of water from air into a hygroscopic material. Adsorption modifies a property of the hygroscopic material, which is measured and compared to a calibrated value to determine the humidity level in the atmosphere.

Capacitive humidity sensors use a strip of metal oxide placed between two electrodes. Based on the atmospheric humidity, the electrical capacity of the strip changes. Adsorption of water contains in the air changes the electrical capacitance of the strip. Resistive humidity sensors use ions in salts instead of a metal oxide strip to determine the humidity. Adsorption of moisture changes the electrical resistance of the salt. A resistive humidity sensor measures this change in impedance to evaluate atmospheric humidity. Each technology is dependent on an absorbent material or use of a control environment to determine humidity.

The hygrometers of the state of the art have proven to be effective in their limited capacity but do not have much room for improvement, as the only potential path for improvement in all three methods is improvement of the stimuli responsive material used and not the technology itself.

Moreover, the response time of existing humidity sensors is not lower than several seconds.

Furthermore, the sensitivity of humidity sensors of the state of the art, which is the minimum humidity change the sensor is able to detect, is larger than 1%.

**Summary of the invention**

An object of the invention is to provide a humidity sensor:

- based on laser speckle imaging (LSI),
- with a response time lower than humidity sensors of the state of the art, and/or
- with a sensitivity higher than humidity sensors of the state of the art, preferably a sensitivity lower than 1 % of humidity variation.

To this end, there is provided an optical device for Laser Speckle Imaging (LSI). The optical device comprises a laser and a photodetector, the laser being arranged to emit an incident beam impinging a working area and the photodetector being arranged for obtaining at least one speckle image of the working area. The optical device further comprises a processing unit arranged and/or programmed for determining humidity data of the working area from the at least one speckle image. The humidity data comprise a humidity level and/or a variation of the humidity level in the working area.

The humidity level may be defined as the quantity of water vapour contained in a gas, preferably in the atmosphere or ambient air. As non-limiting examples, the humidity level may be expressed by any measure or value known by the skilled person, for instance the specific humidity, the absolute humidity, the relative humidity or a ratio or fraction, for instance the ratio between the mass of water vapour and the associated mass of dry air or the ratio between the number of moles of water vapour and the number of moles of air or gas in which the water vapour is contained.

Preferably, the optical device further comprises, according to an optical path of the incident beam, one or more optical components, for instance an optical filter and at least one lens.

Preferably, a waist of the incident beam, in the working area, is comprised between few micrometres and few centimetres.

The optical device for Laser Speckle Imaging (LSI) according to the invention is referred as "the optical device" in the present description.

Preferably, the optical device is arranged so that a temporal coherence length of the incident beam is greater than 1 mm in the working area.

The temporal coherence may be defined as the distance travelled by the wave inside a material before the wave loses its temporal coherence.

The optical device may be arranged so that a spectral laser bandwidth of the incident beam is smaller than or equal to, in the working area, 100 nm, preferably 1 nm, more preferably 0.3 nm and even more preferably 0.1 nm. The spectral bandwidth depends on the wavelength of the incident beam. Therefore, the spectral laser bandwidth of the incident beam is, preferably, smaller than or equal to, in the working area, 0.1 nm for an incident beam wavelength smaller or equal to 350 nm, 0.3 nm for an incident beam wavelength smaller or equal to 500 nm, 1 nm for an incident beam wavelength smaller or equal to 1050 nm and 100 nm for an incident beam wavelength smaller or equal to 10 μm.

Preferably, the processing unit is arranged and/or programmed to determine the humidity data, preferably the variation of the humidity level, from a comparison, preferably a correlation, of a mean intensity of two or more speckle images from the photodetector.

The correlation may refer to mathematical or statistical correlation or dependence.

Preferably, the processing unit is arranged to determine the humidity data:

- according to calibration data from a calibration material, and/or
- from a mean intensity of the at least one speckle image and the calibration data.

The calibration data may come from several calibration materials.

The calibration material may be a material or a type or class of materials that could be positioned or intended to be positioned in the working area.

The calibration data may comprise speckle images of calibration materials and/or mean intensity of speckle images of calibration materials.

Preferably, the optical device further comprises a sample positioned in the working area.

Preferably, the sample is a calibration material. Preferably, when the optical device comprises the sample, the calibration data are obtained from the sample.

The optical device may further comprise, one or more optical elements along optical paths of beams scattered by the sample.

Preferably, the optical device, or optical component(s) of the optical device, and/or the laser and/or the sample and/or the calibration material is arranged so that a wavelength of the incident beam is not absorb, or absorb by a factor lower than one tenth, preferably by a factor lower than one hundredth, by the sample and/or by the calibration material.

Preferably, the sample and/or the calibration is a hygroscopic material.

Preferably, the sample and/or the calibration material comprises capillary bridges. Preferably, the sample and/or the calibration material is able to deform, at least locally, under the effect of capillary forces exerted by the capillary bridges.

Preferably, when the humidity level changes, the forces exerted by the capillary bridges changes, which causes or involves a deformation of the material, the deformation causes or involves typical or representative changes in the speckle images acquired by the photodetector. Preferably, in other words, one speckle image of the sample, or a part of the sample, and/or of the calibration material, or of a part of the calibration material, correspond or is associated with one or a single humidity level. Preferably, in other words, for each humidity level one single, or the same, speckle image of the sample, or a part of the sample, and/or of the calibration material, or a part of the calibration material, will be obtained.

Preferably, the sample and/or the calibration material is a porous material.

Preferably, a porosity of the sample and/or of the calibration material is comprised between 0.5 and 0.99. The porosity of the sample and/or of the calibration material may be larger than or equal to 0.5, preferably to 0.6, more preferably to 0.7, even more preferably to 0.8 and most preferably to 0.9.

Preferably, a minimum Feret's diameter of pores of the sample and/or of the calibration material is comprised between 10 and 10000 nanometres. The minimum Feret's diameter of the sample and/or of the calibration material may be larger than or equal to 10, more preferably to 50 and more preferably to 100 nm. The minimum Feret's diameter of the sample and/or of the calibration material may be lower than or equal to 10000, more preferably to 5000 and more preferably to 1000 nm.

The porosity may be defined as the ratio between the volume of pores or void-space comprised in the sample and/or in the calibration material and the total or bulk volume of the sample and/or of the calibration material; the total volume includes the volume of the pores and the volume of the material in which the sample and/or the calibration material is made of.

Preferably, the processing unit is arranged and/or programmed to determine the humidity data from a comparison, preferably a correlation, between two or more speckle images from the photodetector. The processing unit may be arranged and/or programmed to determine the humidity data from or according to the at least one speckle image and from or according to the calibration data, more preferably from a comparison, preferably a correlation, between the at least one speckle image and the calibration data. Preferably, the processing unit is arranged and/or programmed to determine the humidity data from a comparison, preferably a correlation, between the at least one speckle image and the calibration data when the optical device comprises the sample.

The processing unit may be arranged and/or programmed to determine the humidity data from a comparison, preferably a correlation, between the at least one speckle image and at least one speckle image contained in the calibration data. Preferably, the processing unit is arranged and/or programmed to determine the humidity data from a comparison, preferably a correlation, between the at least one speckle image and at least one speckle image contained in the calibration data when the optical device comprises the sample.

Preferably, the optical device and/or the sample and/or the calibration material is arranged so that a mean free path of the photons of the incident beam in the sample and/or in the calibration material is less than or equal to one tenth of a size, according to the direction of the incident beam, of said sample or of said calibration material.

The mean free path of the photons of the incident beam may be lower than or equal to one fifteen, preferably to one twenty, more preferably to one thirty, even more preferably to one forty and most preferably to one fifty of a size, according to the direction of the incident beam, of the sample or of the calibration material.

Preferably, the optical device and/or the sample and/or the calibration material is arranged so that an absorbance length of the incident beam in the sample or in the calibration material is greater or equal to ten times the mean free path of the photons of the incident beam in said sample or in said calibration material.

The absorbance length may be defined as the length, inside the sample and/or the calibration material, over which the intensity of the incident beam has decreased by a factor, usually a factor $1/e$, where $e$ is equal to $\exp(1)$, due to light absorption by the sample and/or by the calibration material. Light absorption refers to the general definition of absorbance but does not mean the sample and/or the calibration material absorbs light.

Preferably, the sample and/or the calibration material is turbid.

The optical device and/or the sample and/or the calibration material may be arranged so that an energy reflection coefficient, of the incident beam in the sample and/or the calibration material, is higher than or equal to 0.2, preferably to 0.4, more preferably to 0.6, even more preferably to 0.8 and most preferably to 0.9. The energy reflection coefficient, named R, is equal to $R=1-T$ where T is transmittance. In other words, at least 20%, preferably, 40%, more preferably 60%, even more preferably 80% and most preferably 90% of the incident beam energy may be scattered in the backward direction by the sample and/or by the calibration material. In other words, the optical device and/or the sample and/or the calibration material may be arranged so that the transmittance, of the incident beam in the sample and/or in the calibration material, is low due to turbidity of the sample but not due to absorbance of the incident beam by the sample and/or by the calibration material.

Preferably, a contact angle between water (or a water droplet) and a surface of the sample and/or a surface of the calibration material is smaller than 90°.

The contact angle may be lower than or equal to 70°, more preferably to 60°, even more preferably to 50°, most preferably to 40° and even most preferably to 30°.

Preferably, an elastic modulus of the sample and/or of the calibration material is comprised between 10 and $1.10^4$ Pa.

Preferably, the elastic modulus refers to the shear modulus.

The elastic modulus of the sample and/or of the calibration material may be higher or equal to 10 Pa, preferably to 30 Pa, more preferably to 50 Pa, even more preferably to 75 Pa and most preferably to 100 Pa.

Preferably, the sample and/or the calibration material exhibits an elastic behaviour. Preferably, a minimal strain of the sample and/or of the calibration material, in the elastic deformation range of said sample and/or of said calibration material, is greater than or equal to 1%.

Preferably, a critical yield strain of the sample and/or of the calibration material is higher or equal to 1%.

Preferably, the sample or the calibration material comprises or is made of:

- Latex or rubber, that may be natural or synthetic,
- a cluster of absorbent organic or inorganic particles,
- a fibrous absorbent material,
- cells or microorganisms or biological fluids,
- a spongy absorbent organic or inorganic material,
- a hydrogel,
- an aerogel,
- a xerogel,
- a colloidal assembly.

The sample and/or the calibration may comprise or may be made of any hygroscopic material. Preferably, the sample and/or the calibration may comprise or may be made of any material comprising capillary bridges and being able to deform, at least locally, under the effect of capillary forces exerted by the capillary bridges.

Preferably, a minimum Feret's diameter of particles of the colloidal assembly is greater than or equal to 10 nanometres. The minimum Feret's diameter of particles of the colloidal assembly may be greater than or equal to 10 nm, preferably to 50 nm and more preferably to 100 nm. A maximum Feret's diameter of particles of the colloidal assembly may be lower than or equal to 10 mm, preferably to 1 mm.

According to the invention, it is also provided a humidity sensor. The humidity sensor comprises the optical device according to the invention. The humidity sensor further comprises:

- communication means arranged to transfer or exchange data to an external unit intended to communicate with the humidity sensor, the transferred data comprise the humidity data determined, according to the invention, by a processing unit, said processing unit may be the external unit or the processing unit of the optical device or a processing unit of the humidity sensor or a processing unit of the optical device and of the humidity sensor, and/or
- display means arranged to display the humidity data determined, according to the invention, by a processing unit, said processing unit may be the external unit or the processing unit of the optical device or a processing unit of the humidity sensor or a processing unit of the optical device and of the humidity sensor, and/or
- a speaker to emit an audio signal related to the humidity data determined, according to the invention, by a processing unit, said processing unit may be the external unit or the processing unit of the optical device or a processing unit of the humidity sensor or a processing unit of the optical device and of the humidity sensor.

The optical device and/or the humidity sensor may comprise a casing. The laser and/or the photodetector and/or one or each additional component, for instance optical components, may be arranged in the casing. The sample may be arranged in the casing. The casing may comprise apertures so that surrounding gas, atmosphere or air enters and/or circulates inside the casing.

According to the invention, there is also provided a method for determining humidity data of a working area, referred as "the method" in the present description. The method comprises the steps of:

- obtaining at least one speckle image of the working area, the at least one speckle image is obtained by an optical device for Laser Speckle Imaging (LSI),
- determining, by a processing unit, the humidity data from the at least one speckle image.

The method according to the invention may be implemented by any optical device suitable for Laser Speckle Imaging (LSI). The optical device suitable for LSI implementing the method may comprise or not the processing unit. Preferably, the optical device suitable for LSI implementing the method comprises the processing unit. Preferably, the method according to the invention is implemented by the optical device according to the invention.

Preferably, the optical device according to the invention is arranged, more preferably specifically arranged, to implement the method according to the invention. Thus, any feature of the optical device according to the invention may be transposed and/or integrated in the method according to the invention and vice versa.

The determining step may comprise a comparison, preferably a correlation, of a mean intensity of two or more speckle images from the photodetector.

The humidity data may be determined from or according to calibration data from a calibration material. The humidity data may be determined from a mean intensity of the at least one speckle image and from or according to the calibration data.

The humidity data may be determined from a comparison, preferably a correlation, between two or more speckle images from the photodetector. The humidity data may be determined from the at least one speckle image and the calibration data, preferably from a comparison, preferably a correlation, between the at least one speckle image and the calibration data.

**Brief description of the drawings**

Further inventive objects, features and advantages will become apparent from the following detailed description of several embodiments of the invention with references to the drawings, in which:

- FIGURE 1 is schematic side view of an embodiment of the optical device according to the invention,
- FIGURE 2 is a schematic representation of a material comprising capillary bridges,
- FIGURE 3 are speckle images obtain from a colloid film of PMMA-b-PBA at two different humidity levels,
- FIGURE 4A shows a mean intensity curve of a succession of speckle images obtained from a colloid film of PMMA-b-PBA during cycling variation of the humidity level between 6% to 65%, each point of the mean intensity curve corresponds to the mean intensity of one speckle image,

- FIGURE 4B shows the correlation curve obtained from correlation values of a succession of speckle images obtained from a colloid film of PMMA-b-PBA during cyclic variation of the humidity level between 6% to 65%, each point of the correlation curve corresponds to one correlation value and each correlation value is calculated between the speckle image acquired at t=5000 seconds and each speckle image, of the succession of speckle images, acquired subsequently,
- FIGURE 5 shows a bar chart illustrating the mean free path of the incident beam in the sample for a humidity level of 65% and a humidity of 6%,
- FIGURE 6A shows periodic variation cycles of the humidity level around a humidity level of 30%,
- FIGURE 6B shows the mean intensity curve of a succession of speckle images obtained from a colloid film of PMMA-b-PBA during a sequence comprising: a flow of humid air at a humidity level at 65%, a first periodic cycling variation of the humidity level around 30%, a second periodic cycling variation of the humidity level around 20%, a third periodic cycling variation of the humidity level around 10%, a flow of dry air and no air flow,
- FIGURE 6C shows a sliding average intensity curve, the average being calculated over each period of humidity level variation, obtained from the mean intensity of speckle images according to FIGURE 6B,
- FIGURE 7 shows the mean intensity curve of a succession of speckle images obtained from a colloid film of PMMA-b-PBA during cyclic variation of the humidity level between 6% to 65%,
- FIGURE 8 shows the correlation curve of a succession of speckle images obtained from a colloid film of PMMA-b-PBA during cyclic variation of the humidity level between 6% to 65%, each correlation value has been calculated between the speckle image acquired at t = 0.1 second and each speckle image acquired subsequently.

## Detailed description of embodiments of the invention

The embodiments hereinafter described are not restrictive; other embodiments comprising a selection of features described hereinafter may be considered. A selection may comprise features isolated from a set of features (even if this selection is isolated among a sentence comprising other features thereof), if the selection is sufficient to confer a technical advantage or to distinguish the invention form the state of the art. This selection comprises at least a feature, preferably described by its technical function without structural features, or with a part of structural details if this part is sufficient to confer a technical advantage or to distinguish the invention form the state of the art on its own.

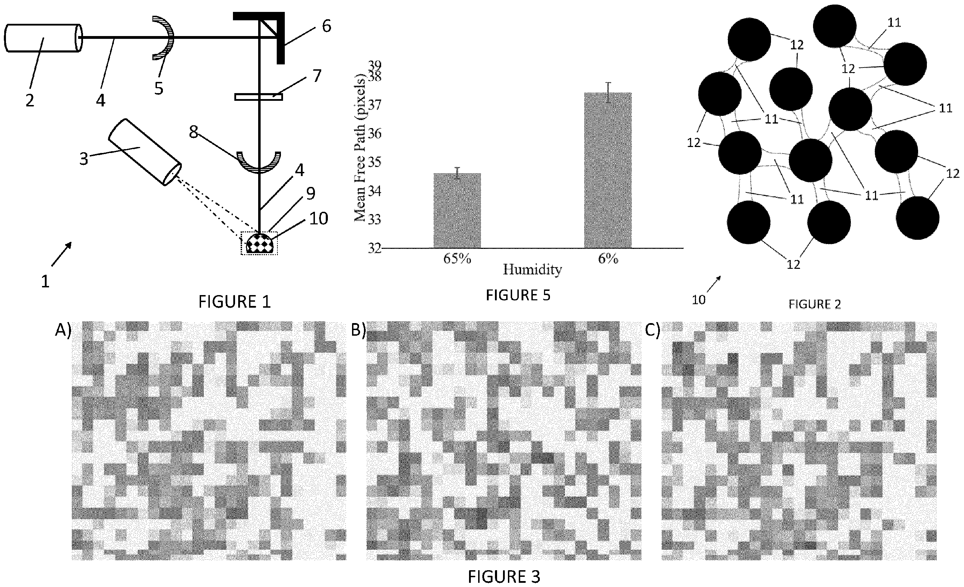

In reference to FIGURE 1, an embodiment of an optical device for Laser Speckle Imaging (LSI) 1, referred as optical device 1, according to the invention is described. The optical device 1 comprises a DPSS Laser from Spectraphysics® emitting a 488 nm wavelength with a 100 mW power and a 12 bits CMOS camera from Basler® with a 1280x1024 pixels resolution. Any laser and any photodetector able to provide LSI may be used. As a non-limiting embodiment, the optical device 1 further comprises an optical assembly of optical components arranged along the incident beam 4 emitted by the laser 2. This optical assembly comprises, along the path of the incident beam 4, a first plano-concave lens 5 from Thorlabs® with a 50 mm focal length, a mirror 6, a neutral density filter 7 from Thorlabs® with ND = 1 and a second plano-concave lens 8 from Thorlabs® with a 250 mm focal length. This optical assembly is non-restrictive, a skilled person will be able to choose any type of set-up he sees fit. The incident beam 4 emit by the laser 2 impinges a working area 9. The photodetector 2 is arranged for obtaining at least one speckle image of the working area 9. The optical device 1 further comprises a processing unit arranged for determining humidity data of the working area 9 from the at least one speckle image. The humidity data may comprise or be related to a humidity level and/or a variation of the humidity level. In the present description, the term humidity level refers to the relative humidity.

As well known by a skilled person, a laser speckle image results from the interference of a coherent light with a material placed in the working area 9. Surprisingly, the inventors found the complete reversibility of the deformation process of the material according to the humidity level. By cycling humidity change from few percent to saturate atmosphere the inventors observed that the same speckle image is obtained for the same level of humidity with a high accuracy. The inventors observed that the speckle images obtain from an object, a material or a sample 10 comprising capillary bridges 11 and being able to deform, at least locally, under the effect of capillary forces exerted by the capillary bridges 11 was directly related and can be associated to the humidity level of the surrounding atmosphere of the sample 10. In other words, the inventors found that the size of capillary bridges 11, and so the size of the sample 10, increases when humidity level decrease and decrease, and so the size of the sample 10, when the humidity level increase in a complete reversible way.

Thus, according to a first embodiment, the processing unit is arranged to determine a variation of the humidity level from a comparison between two or more speckle images from the photodetector 2 without using calibration data. In that case, the sample 10 may be comprised in the optical device 1 but does not need to be comprised in the optical device 1. Nevertheless, the same area of the sample 10 has to be impinged by the incident beam 4. The optical device 1 may be arranged so that the position of the working area 9 may be tuned by the skilled person as he sees fit according to the application, and in particular when the sample 10 is not part of the optical device 1. For instance, the optical device 1 may comprise controls or the like arranged to tune the laser 2 and/or the photodetector 3 and/or the optical assembly and/or the position thereof to modify the working area 9 (size, position and distance relative to the optical device 1).

Preferably, according to the first embodiment, the optical device 1 further comprises the sample 10, which is positioned in the working area 9. In that case, preferably, the working area 9 is also comprises in the optical device 1 and the same area of the sample 10 is necessarily impinged by the incident beam 4. Nevertheless, when the sample 10 is not comprised in the optical device 1, the optical device 1 may be intended to be fixed, attached or mounted on a support or a mount. After the optical device 1 has been fixed or mounted on the support, the photodetector 2 will acquire images of the same area 9 of an external layer of the support or the mount. Thus, according to the first embodiment, the processing unit is arranged to determine a variation of the humidity level from a comparison between two or more speckle images from the photodetector without using calibration data.

In an advantageous improvement, when the sample 10 is comprises in the optical device 1, the processing unit is arranged to determine the humidity data from a comparison between at least one speckle image and calibration data. Nevertheless, when the sample 10 is not comprised in the optical device 1, after the optical device 1 has been fixed or mounted on the support, the processing unit may be arranged to acquired calibration data from the external layer of the support, during a controlled variation of the humidity level of the surrounding atmosphere. Calibration data are from a calibration material. According to the first embodiment, calibration data are speckle images, each acquired at a different humidity level. Speckle images of the calibration material are images of the same area of the calibration material or of the sample 10. When the sample 10 is part of the optical device 1, the calibration material is the material in which the sample 10 is made of.

Regarding the speckle image comparison, the skilled person will choose among the known methods of images comparison as he sees fit. The comparison may be limited to part(s) or region(s) of the speckle image. It is also possible to identify common parts or common regions on different speckle images if disparity are presents.

Surprisingly, the inventors also found that a mean intensity of the speckle image is directly related and can be associated to the humidity level of the surrounding atmosphere of the sample 10. Such observation allows avoiding image comparison. Moreover, it also allows using only a single value of mean intensity from a calibration material for determining the humidity data. Moreover, in that case, as no comparison of speckle images is needed, it is not required to obtain speckle images of the same area of the sample 10. Thus, in that case, whether the sample 10 is part or not of the optical device 1 makes no difference. Therefore, according to a second embodiment, the processing unit is arranged to determine a variation of the humidity level from mean intensities of two or more speckle images.

In the present description, as described in detail below, the intensity refers to the raw intensity provide by each photosite of the photodetector 2. Thus, the skilled person can choose any value derived from or function of raw intensity acquired by the photosites of the photodetector 2. For instance, the mean intensity may also refer to the intensity of any of the parameters contain in the pixels of an image. As non-limitative examples, the parameter may be one or several of the R (red) G (green) and B (blue) variables, hue, saturation, lightness or any type of information, known by a skilled person, that may be associated or comprised in a pixel.

Preferably, according to the second embodiment, the processing unit is arranged to determine a humidity data from a mean intensity of at least one speckle image and calibration data. In that case, calibration data are mean intensity values, each mean intensity value being associated with different humidity level. In an advantageous improvement, the processing unit is arranged to determine a humidity data from a comparison, preferably a correlation, between the mean intensity of at least one speckle image and the calibration data.

According to the second embodiment, as non-limiting example, when the sample 10 is not part of the optical device 1, the calibration data may comprise data coming from a list of calibration materials of which the external layer of the support may be made of, such as paints or coatings for instance.

According to the first or the second embodiment, when the sample 10 is comprised in the optical device 1, or respectively when the sample 10 is not comprised in the optical device 1, for instance after the optical device 1 has been fixed or mounted on the support, the processing unit may be arranged to acquired calibration data from the sample 10, or respectively from the external layer of the support, during a controlled variation of the humidity level of the surrounding atmosphere.

Preferably, to increase the reproducibility and/or the reversibility of the deformation of the material comprising capillary bridges 11 over time and/or over the cycles of humidity level changes:

- an elastic modulus of the material is comprised between 10 and $1.10^4$ Pa,
- a contact angle between water and a surface of the material is smaller than 90°, and
- a minimal strain of the material, in the elastic deformation range of said sample or of said calibration material, is greater than or equal to 1%.

According to the invention, and in reference to FIGURE 2, the sample 10 or the calibration material may be any kind of material that comprises capillary bridges 11 and able to deform, at least locally, under the effect of capillary forces exerted by the capillary bridges 11. The capillary bridges 11 extend between objects 12, the sample 10 or the calibration material consisting of the capillary bridges 11 and the objects 12. As non-limiting examples, the objects 12 may be particles or lamellar structures or sheets or layers or sheaths or fibers or chains.

To illustrate the previous description of the optical device 1 according to the invention, results obtain by the optical device 1 are introduced. For practical reasons, the sample 10 used is a colloidal assembly made of core-shell particles of poly(methyl methacrylate)-b-poly(butyl acrylate) (PMMA-b-PBA). The size of the particles is 1 $\mu$m and the glass transition temperature ($T_G$) is 80°C. The sample 10 is obtain by drop casting. A droplet of 8 $\mu$l of a colloidal solution consisting of at least 10% (volume/volume) colloids, the solution may preferably comprise 30%, was deposited on a borosilicate microscope glass slide (25$\times$75$\times$1mm) as substrate. The substrate was rinsed with acetone and alcohol without any other treatment. It is obtained a closed packed system of colloids forming a film 10 referred as the sample 10 in the following description of the results. As a general remark concerning polymer colloids, it is worth noting that if the experiment temperature ($T_E$) is higher than the minimum film formation temperature (MFFT) of the particles, the particles will deform into a dodecahedral or a honey-comb self-assembled structure. If the $T_E$ is higher than the $T_G$ of the colloids, the polymers within the colloid will undergo coalescence and form a homogenous polymer film. However, if $T_E$ is lower than MFFT the system concluded in a closed packed state with residual water forming capillary bridges 11. Thus, when a colloidal assembly is intended to be used as a sample 10, a particular attention must be given to the $T_E$, MFFT and $T_G$ so that the colloids film comprises capillary bridges 11. Regarding colloidal assembly/film, the capillary bridges 11 are the result of solvent retention into particles network. This creates a meniscus between the solid-liquid-gas interfaces and introduces capillary stress as a result of capillary pressure and capillary force within the sample 10. Speckle images of the sample 10 are acquired at 10 fps. A waist of the incident beam 4 at the surface of the sample 10 is around 1 cm.

LSI provides an evaluation of the mean free path of a photon within a sample to create a speckle image. LSI uses the interference effect from the coherent backscattered photons to image the sample 10. Mean free path refers to the average distance a photon will scatter within a sample before being backscattered and detected by the detector 2. Any change in position of the between objects 12 forming the sample 10 will change the intensity of the speckle and de-correlate the speckle image.

For conducting the experiments, the sample 10 was placed in a sealed cell and the humidity level of the surrounding atmosphere of the sample 10 was finely controlled and monitored with a precision of 0,1%. As known by the skilled person, LSI is temperature-dependent. Therefore, temperature was controlled during the experiments. However, on-site utilization of the optical device 1, when no control of the temperature is carried out, a temperature sensor can be added to the optical device 1 and the calibration data may be function of the temperature and/or the process unit may be arranged to process the speckle images according to any process known by the skilled person to account the effect of the temperature. In a more general consideration, speckle images can be processed, preferably before the step of determining the humidity data, by any method known by the skilled person, for instance with a process for image quality improvement and/or using a point spread function of the optical device 1.

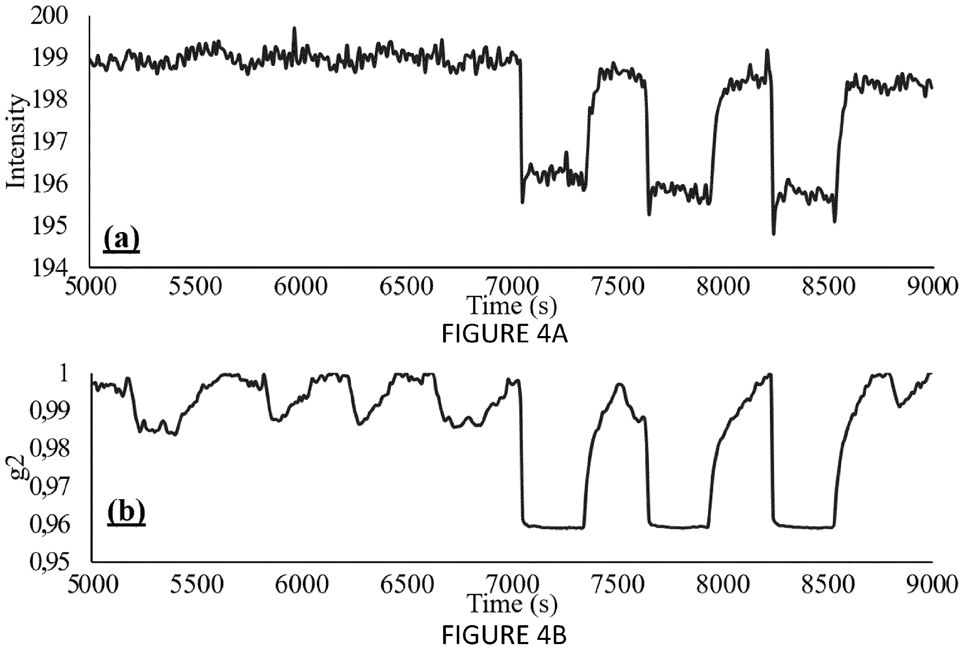

In reference to Figure 3, the capillary bridges 11 and the sample 10 deformation are observed to be stable at constant environmental conditions. To observe the effect of humidity on structural stability of the sample 10, humidity level of the surrounding atmosphere of the sample 10 was fluctuated from 65% to 6%, three times for an interval of 5 minute. In the following description below, the term "humidity level" used alone refers to the humidity level of the surrounding atmosphere of the sample 10 and the term "Intensity" used alone refers to the mean intensity of a speckle image. The left and right images, respectively image A acquired at t=7210 second and image C acquired at t=7790 seconds, of Figure 3 corresponds to a humidity level of the 6%, the center image, image B acquired at t=7520 seconds, corresponds to a humidity level of 65%. A close inspection of the speckle images indicates that when the humidity is changed, the speckle pattern evolves to a new pattern. However, it can be observed from FIGURE 4B that, when the humidity change is reversed, the speckle pattern returns to its original form with a high correlation coefficient, a coefficient higher than 0.995. This indicates that changes of the structure of the sample 10 due to change in humidity takes place on a microscopic level and is highly reversible. The reversibility of this phenomenon was checked three times and was found to be reproducible.

FIGURE 4A illustrates the mean intensity of the speckle images over time and FIGURE 4B is the correlation curve obtained from each of the correlation value between the speckle image acquired at t=5000 second (6% of humidity) and every speckle images acquired subsequently. The intensity curve indicates that a change in humidity condition from 6% to 65% instantaneously lead to a reduction of average intensity of the speckle image by 1.5%. Reversal of humidity levels from 65% to 6% reversed the intensity change of the speckle image to its former value. This indicates that the capillary bridges 11, and so the sample 10 deformation, is directly influenced by humidity level of the sample 10. The correlation curve supported the observation made based on intensity curves. Speckle image at t=6500 (6% humidity) and at t= 7200 (65% humidity) observed to be decorrelated. However, the speckle images taken at t= 6500 (6% humidity) correlates well with the speckle image taken at t= 7500, where the speckle image of the sample is reversed to its original form (humidity changed from 65% to 6%). The strong correlation between the speckle image before humidity change and after reversal of that change corroborates with observations made based on speckle images and confirms that the phenomenon is reversible on a microscopic level. This indicates that the structural change observed by the sample 10 is not a permanent restructuring but a temporary restructuring. Since the colloids used have high $T_G$ and will not deform at experimental temperature, these changes could be due to deformation of the capillary bridges 11. This observation demonstrates elongation and compression of capillary bridges 11. Furthermore, it corroborates the influence and reversibility effect of humidity on structure of the sample 10.

In reference to FIGURE 5, a quantitative evaluation of the difference between structural states at low and high humidity was conducted by calculating the mean free path of the incident beam 4 in the sample 10 for the humidity level of 65% and for the humidity level of 6%. Equation 5 was fit over the radial intensity curve of the sample 10 under two humidity conditions to extrapolation of the mean free paths. At high humidity (65%), mean free path is extrapolated to 34.6 pixels. At low humidity (6%) mean free path is extrapolated to 37.4 pixels. This correlates with the assumption whereby the length of the capillary bridges 11 increases when the humidity decreases and vice versa. The results also confirm that the reversible dynamics observed are due to the elongation and compression of capillary bridges 11 and not due to rearrangement or other restructuring.

$$R(\rho) = \frac{1}{(l^*)^2}\left[\frac{0.0398}{\left(1+\left(\frac{\rho}{l^*}\right)^2\right)^{\frac{1}{3}}} - \frac{0.0928}{\left(5.444+\left(\frac{\rho}{l^*}\right)^2\right)^{\frac{1}{3}}} + 0.0597\left(\frac{1}{\left(1+\left(\frac{\rho}{l^*}\right)^2\right)^{\frac{1}{2}}} - \frac{1}{\left(5.444+\left(\frac{\rho}{l^*}\right)^2\right)^{\frac{1}{2}}}\right)\right] \quad \text{equation 5,}$$

where $R(\rho)$ is the mean radial intensity from the centre of the speckle image, $\rho$ is the radial distance from the centre of the speckle image and $l^*$ is the mean free path of the incident beam 4 in the sample 10.

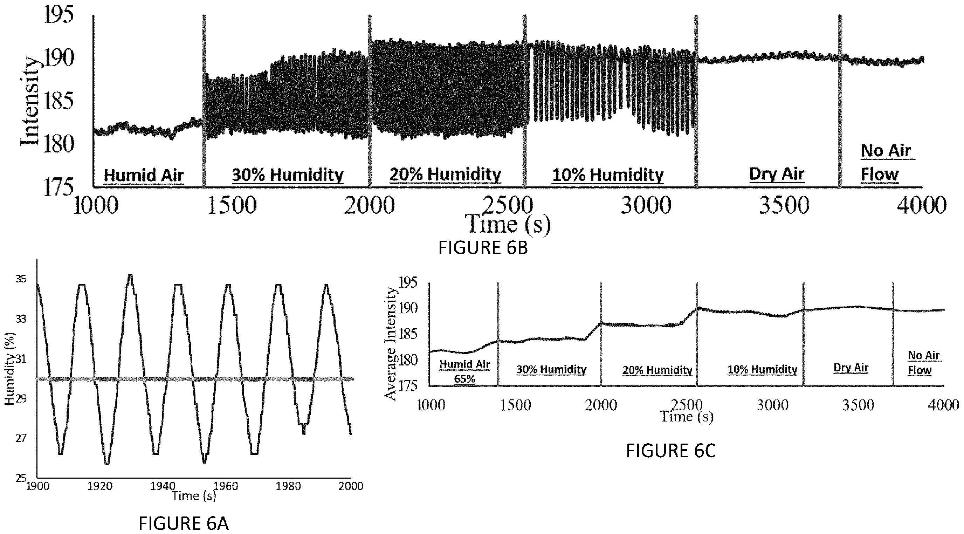

In reference to FIGURES 6B, 6C and 6D, reproducibility of the reversible transitions of the capillary bridges 11 and the sample 10 were assessed through cyclic variations of the humidity level around a specific value of humidity level. Alternating dry and humid air flows was injected so as to maintain one specific value of humidity level (specific values of 30%, 20% and 10% has been investigated) using a feedback loop based on data from humidity sensors placed in the sealed cell. The variation of the measured humidity level obtained by such a process for a value of humidity level set at 30% is shown FIGURE 6A. FIGURE 6B shows the mean intensity curve derived from each speckle images over time and FIGURE 6C shows the sliding average of the mean intensity of speckle images, from FIGURE 6B, over a time corresponding to the period of each cycle of dry and humid air injection as illustrated FIGURE 6A. In FIGURE 6B, the variation of the mean intensity of the speckle images follows the same trend as the humidity level changes. In FIGURE 6C, a clear difference in intensity based on the average humidity could be evaluated. This indicates that the speckle image of an area of a sample 10 is unique and representative to the sample 10 humidity (and to the area of the sample 10) but the average intensity of the speckle image can be used to evaluate humidity data, independent of sample 10 on which the speckle images are acquired. Thus, it is possible to determine a difference in humidity level without any calibration data or a humidity level according to calibration data. The results obtained for humidity level of 30%, 20% and 10% indicate rapid and very reproducible decorrelation between any two states of the sample 10. Despite a consequent response time of the regulation system caused by delay in the feedback loop, a good reproducibility between two corresponding humidity levels is observed. The decorrelation values when compared to the analogue input of humid or dry air, indicate a very strong dependence on the humidity level of the input airflow. The comparison also indicates a strong and consistent reversibility between the two humidity states.

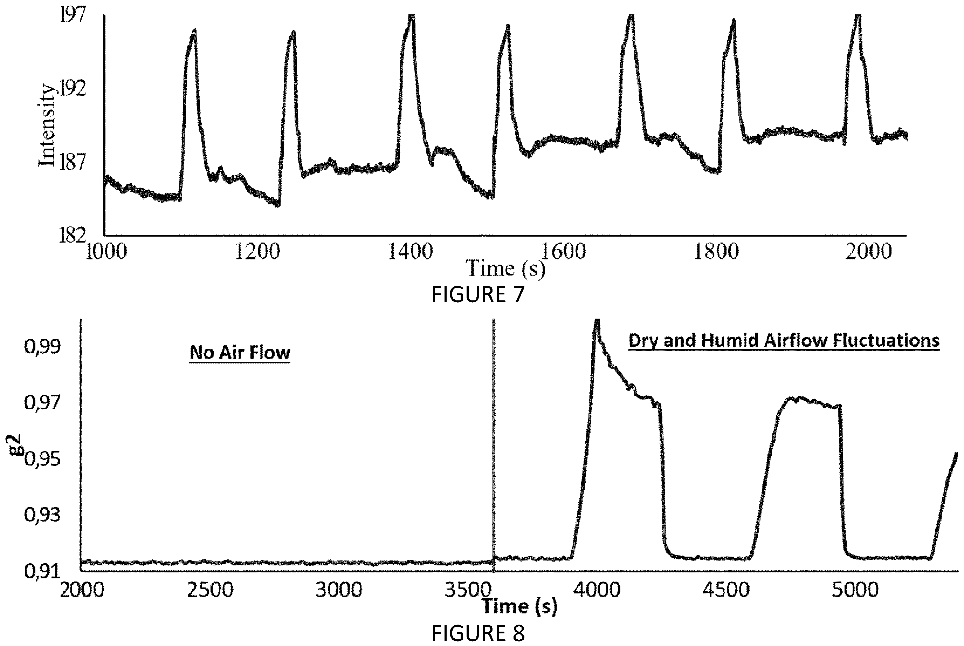

The mean intensity curve according to FIGURE 7 and the correlation curve according to FIGURE 8 have been obtained through cyclic variations of the humidity level from 6% to 65%. Correlation curve of FIGURE 8 has been obtained from each correlation value calculated between the speckle image acquired at t = 0.1 second and each speckle images acquired subsequently. Prior to 3600 second, no air flow was injected. The intensity curve of the sample 10 shows that the variation in speckle pattern is consistent with humidity variation of 0.1%. This indicates that capillary bridges 11 between the particles 12 is extremely sensitive to the humidity variation. Moreover, the change in shape of capillary bridges 11 due to 0.1% in humidity variation is enough to change the macroscopic structure of the sample 10. This also indicates that LSI is a technique sensitive enough to be used to detect these small changes.

All the experiments were also conducted with dispersion of 1 μm silica particles to prove the effect is not limited to polymer colloids (results not provided). This also indicates that this phenomenon is not limited to polymeric material but can be observed using any material that can form capillary bridges.

The invention is not restricted to embodiments described above and numerous adjustments may be made within the scope of the invention.

Thus, in combinable alternatives of previous embodiments:

- the optical device 1 is arranged and/or the sample 10 is chosen and/or the calibration material is chosen so that a temporal coherence length of the incident beam is greater than 1 mm in the working area 9, and/or

- a porosity of the sample 10 or of the calibration material is comprised between 0.5 and 0.99, and/or
- a minimum Feret's diameter of pores of the sample 10 or of the calibration material is comprised between 10 and 10000 nanometres, and/or
- the optical device 1 is arranged and/or the sample 10 is chosen and/or the calibration material is chosen so that an absorbance length of the incident beam in the sample 10 or in the calibration material is greater or equal to ten times the mean free path of the photons of the incident beam 4 in said sample 10 or in said calibration material.

**Claims**

1. Optical device for Laser Speckle Imaging (LSI) (1) comprising a laser (2) and a photodetector (3), the laser being arranged to emit an incident beam (4) impinging a working area (9) and the photodetector being arranged for obtaining at least one speckle image of the working area, the optical device further comprising a processing unit arranged and/or programmed for determining humidity data of the working area from the at least one speckle image, the humidity data comprising a humidity level and/or a variation of the humidity level in the working area.

2. Optical device (1) according to claim 1, wherein the optical device is arranged so that a temporal coherence length of the incident beam (4) is greater than 1 mm in the working area (9).

3. Optical device (1) according to claim 1 or 2, wherein the processing unit is arranged and/or programmed to determine the humidity data from a comparison, preferably a correlation, of a mean intensity of two or more speckle images from the photodetector (3).

4. Optical device (1) according to any of claims 1 to 3, wherein the processing unit is arranged to determine the humidity data:

    - according to calibration data from a calibration material, and/or
    - from a mean intensity of the at least one speckle image and the calibration data.

5. Optical device (1) according to any of the preceding claims, further comprising a sample (10) positioned in the working area (9).

6. Optical device (1) according to any of claim 4 or 5, wherein the sample (10) according to claim 5 or the calibration material according to claim 4 comprises capillary bridges (11) and is able to deform, at least locally, under the effect of capillary forces exerted by the capillary bridges.

7. Optical device (1) according to any of the claim 4 to 6, wherein the sample (10) according to claim 5 or the calibration material according to claim 4, is a porous material having:

    - a porosity comprised between 0.5 and 0.99, and/or
    - a minimum Feret's diameter of pores comprised between 10 and 10000 nanometres.

8. Optical device (1) according to any of the claim 4 to 7, wherein the processing unit is arranged and/or programmed to determine the humidity data:

    - from a comparison, preferably a correlation, between two or more speckle images from the photodetector (3) and the calibration data, or
    - from the at least one speckle image and the calibration data.

9. Optical device (1) according to any of the claim 4 to 8, wherein the optical device is arranged so that a mean free path of the photons of the incident beam (4) in the sample (10) according to claim 5 or in the calibration material according to claim 4 is less than or equal to one tenth of a size, according to the direction of the incident beam, of said sample or of said calibration material.

10. Optical device (1) according to the preceding claim, wherein the optical device is arranged so that an absorbance length of the incident beam (4) in the sample (10) according to claim 5 or in the calibration material according to claim 4 is greater or equal to ten times the mean free path of the photons of the incident beam in said sample or in said calibration material.

11. Optical device (1) according to any of claims 4 to 10, wherein:

- a contact angle between water and a surface of the sample (10) according to claim 5 or a surface of the calibration material according to claim 4 is smaller than 90°, or
- an elastic modulus of the sample (10) according to claim 5 or of the calibration material according to claim 4 is comprised between 10 and $1.10^4$ Pa.

12. Optical device (1) according to any of claims 4 to 11, wherein the sample (10) according to claim 5 or the calibration material according to claim 4 exhibits an elastic behavior and wherein a minimal strain of said sample or of said calibration material, in the elastic deformation range of said sample or of said calibration material, is greater than or equal to 1%.

13. Optical device (1) according to any of claims 4 to 12, wherein the sample (10) according to claim 5 or the calibration material according to claim 4 is made of:

- Latex,
- a cluster of absorbent organic or inorganic particles,
- a fibrous absorbent material,
- cells or microorganisms or biological fluids,
- a spongy absorbent organic or inorganic material,
- a hydrogel,
- an aerogel,
- a xerogel,
- a colloidal assembly.

14. Method for determining humidity data of a working area (9), said humidity data comprising a humidity level and/or a variation of the humidity level of the working area, said method comprising the steps of:

- obtaining at least one speckle image of the working area, the at least one speckle image is obtained by an optical device for Laser Speckle Imaging (LSI) (1), said optical device comprises a laser (2) being arranged to emit an incident beam (4) impinging the working area and a photodetector (3) being arranged for obtaining at least one speckle image of the working area,
- determining, by a processing unit, the humidity data from the at least one speckle image.

15. Humidity sensor comprising the optical device for Laser Speckle Imaging (LSI) (1) according to any of claims 1 to 13, said humidity sensor further comprises:

- communication means arranged to transfer or exchange data to an external unit intended to communicate with the humidity sensor, the transferred data comprise humidity data determined by a processing unit, or
- display means arranged to display humidity data determined by a processing unit.

FIGURE 1

FIGURE 5

FIGURE 2

FIGURE 3

FIGURE 4A

FIGURE 4B

EP 4 407 296 A1

FIGURE 6A

FIGURE 6B

FIGURE 6C

FIGURE 7

Dry and Humid Airflow Fluctuations

No Air Flow

FIGURE 8

**Europäisches Patentamt**
**European Patent Office**
**Office européen des brevets**

# EUROPEAN SEARCH REPORT

Application Number

EP 23 30 5089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRAGA ROBERTO A. ET AL: "Assessment of Seed Viability by Laser Speckle Techniques", BIOSYSTEMS ENGINEERING, vol. 86, no. 3, 1 November 2003 (2003-11-01), pages 287-294, XP093018935, AMSTERDAM, NL ISSN: 1537-5110, DOI: 10.1016/j.biosystemseng.2003.08.005 * the whole document * | 1-15 | INV. G01N21/4785 G01N21/4788 ADD. G01N21/479 |
| X | US 2019/282102 A1 (LIM GUEISAM [KR] ET AL) 19 September 2019 (2019-09-19) * paragraphs [0061] – [0206]; figures * | 1,4-15 | |
| X | RAFAEL RODRIGUES CARDOSO ET AL: "Frequency signature of water activity by biospeckle laser", OPTICS COMMUNICATIONS, ELSEVIER, AMSTERDAM, NL, vol. 284, no. 8, 4 January 2011 (2011-01-04), pages 2131-2136, XP028145130, ISSN: 0030-4018, DOI: 10.1016/J.OPTCOM.2011.01.003 [retrieved on 2011-01-11] * the whole document * | 1-15 | |

TECHNICAL FIELDS SEARCHED (IPC)

G01N

The present search report has been drawn up for all claims

| Place of search | Date of completion of the search | Examiner |
|---|---|---|
| Munich | 2 June 2023 | Politsch, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 5089

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2023

| Patent document cited in search report | | Publication date | Patent family member(s) | | Publication date |
|---|---|---|---|---|---|
| US 2019282102 | A1 | 19-09-2019 | CN 109475291 | A | 15-03-2019 |
| | | | EP 3488764 | A1 | 29-05-2019 |
| | | | KR 20180010672 | A | 31-01-2018 |
| | | | US 2019282102 | A1 | 19-09-2019 |
| | | | WO 2018016686 | A1 | 25-01-2018 |